# EUROPEAN PATENT APPLICATION

(11) **EP 4 730 485 A1**
(43) Date of publication of application: **22.04.2026**
(21) Application number: 25204174.4
(22) Date of filing: 23.09.2025
(51) Int. Cl.: H01M 10/613, H01M 10/6563, H01M 10/6566

(54) **ENERGY STORAGE SYSTEM**

(30) Priority: 14.10.2024 KR 20240139329
(71) Applicant: SAMSUNG SDI CO., LTD., Yongin-si, Gyeonggi-do 17084 (KR)
(72) Inventor: LEE, KICHOON, 17084 YONGIN-SI (KR)
(74) Representative: Regimbeau

(57) **Abstract**

An energy storage system (100) includes a battery rack (120) having a plurality of battery packs (110), an air-conditioner (130) adjacent to the battery rack and configured to discharge air, and a duct (140) connected to the air-conditioner, the duct including a plurality of outlets (191) and a plurality of baffles (150), the plurality of baffles being arranged in a longitudinal direction of the duct within the duct and being configured to adjust an amount of air supplied to the plurality of outlets.

## Description

### TECHNICAL FIELD

The present disclosure relates to an energy storage system.

### TECHNICAL BACKGROUND

An energy storage system is a system in which batteries are integrated to facilitate battery storage and management. Energy storage systems may be used as backup power for renewable energy and as emergency power in homes, factories, and businesses. As power consumption has increased, development of technology for energy storage systems to improve battery efficiency and ease of storage is desired.

The detailed information described in the background technology of the disclosure is only intended to improve understanding of the background of the present disclosure and therefore may include information that does not constitute prior art.

### SUMMARY

In an aspect, an energy storage system includes a battery rack including a plurality of battery packs, an air-conditioner discharging air, and a duct delivering the air discharged from the air-conditioner to the battery rack, the duct including a plurality of outlets, wherein the duct includes a plurality of baffles arranged in a longitudinal direction of the duct within the duct and adjusts an amount of air supplied to the plurality of outlets by the plurality of baffles.

The plurality of outlets may be arranged in the longitudinal direction of the duct, and the plurality of baffles may partition the outlets.

Each of the plurality of baffles may include a first extension portion extending in a first direction and a second extension portion bent from the first extension portion toward the outlet.

The first extension portions of the plurality of baffles may be apart from each other in a direction perpendicular to the longitudinal direction of the duct to define a plurality of flow paths.

A spacing between the first extension portions may increase as a length of each of the first extension portions increases.

At least one of the plurality of baffles may further include a round corner portion between the first extension portion and the second extension portion to connect the first extension portion to the second extension portion.

A length of the first extension portion of the plurality of baffles may decrease as a location of the outlet adjacent to the second extension portion is closer to the air-conditioner.

An angle formed by the first extension portion and the second extension portion may be about 30 degrees to about 45 degrees.

The plurality of outlets may be located at the other ends of the plurality of flow paths.

The second extension portion may have a round shape.

A total area of the plurality of outlets partitioned by the plurality of baffle may increase as being away from the duct

In another aspect, an energy storage system includes a battery rack including a plurality of battery packs, an air-conditioner discharging air, and a duct delivering the air discharged from the air-conditioner to the battery rack, the duct including a plurality of outlets, wherein the duct includes a plurality of baffles arranged in a longitudinal direction of the duct within the duct and the plurality of outlets are arranged in the longitudinal direction of the duct, and the plurality of outlets are partitioned by the plurality of baffles.

The number of outlets partitioned by two adjacent baffles among the plurality of baffles may increase away from the air-conditioner.

Each of the plurality of baffles may include a first extension portion extending in a first direction and a second extension portion bent from the first extension portion toward each of the plurality of outlets.

The first extension portions of the plurality of baffles may be apart from each other in a direction perpendicular to the longitudinal direction of the duct to define a plurality of flow paths.

A spacing between the first extension portions may increase as a length of each of the first extension portions increases.

At least one of the plurality of baffles may further include a round corner portion between the first extension portion and the second extension portion to connect the first extension portion to the second extension portion.

A length of the first extension portion of the plurality of baffles may decrease as a location of the outlet adjacent to the second extension portion is closer to the air-conditioner.

An angle formed by the first extension portion and the second extension portion may be about 30 degrees to about 45 degrees.

The second extension portion may have a round shape.

From among the plurality of outlets partitioned by the plurality of baffles, a total area of a baffle may increase as being away from the duct.

### BRIEF DESCRIPTION OF THE DRAWINGS

The following drawings attached to this specification illustrate embodiments and, together with the detailed description of the invention described below, serve to further understand the technical idea of the present disclosure; therefore, the present disclosure should not be interpreted as being limited to matters described in such drawings:
FIG. 1 is a perspective view schematically illustrating an example of an energy storage system according to an embodiment;
FIG. 2 is a cross-sectional view schematically illustrating an example of a battery rack of FIG. 1;
FIG. 3 is a perspective view schematically illustrating an example of a battery pack included in the battery rack of FIG. 2;
FIG. 4 is a perspective view schematically illustrating an example of a battery module included in the battery pack of FIG. 3;
FIG. 5 is a plan view schematically illustrating an example of a duct of FIG. 1;
FIG. 6 is a perspective view schematically illustrating a portion of the duct of FIG. 5;
FIG. 7 is a cross-sectional view schematically illustrating an example of a first extension portion and a second extension portion of the duct of FIG. 5;
FIG. 8 is a cross-sectional view schematically illustrating another example of the first extension portion and the second extension portion of the duct of FIG. 5;
FIG. 9 is a plan view schematically illustrating another example of the duct of FIG. 1;
FIG. 10 is a cross-sectional view schematically illustrating an example of a first extension portion and a second extension portion of the duct of FIG. 9;
FIG. 11 is a plan view schematically illustrating another example of the duct of FIG. 1; and
FIG. 12 is a plan view schematically illustrating another example of the duct of FIG. 1.

### DETAILED DESCRIPTION

Hereinafter, embodiments are described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments disclosed in this specification and the configuration illustrated in the drawings are only one of the most preferred embodiments and do not represent all the technical idea of the present disclosure, so it should be understood that other equivalents and modifications could be made thereto without departing from the scope of the disclosure.

It will be further understood that the terms "comprise or include" and/or "comprising or including," when used in this specification, specify the presence of stated features, numbers, steps, operations, elements, and/or components, but do not preclude the presence or addition of one or more other features, numbers, steps, operations, elements, components, and/or groups thereof. In addition, for ease understanding of the present disclosure, the accompanying drawings are not drawn to real scale, but the dimensions of some components may be exaggerated. In addition, like reference numerals may be given to the like components in different embodiments. Although the terms first, second or the like are used to describe different elements, these elements are not limited by the terms. These terms are used to distinguish one element from another, and unless stated to the contrary, a first element may be a second element.

Throughout the specification, unless stated otherwise, each element may be singular or plural.

When an element is "above (or under)" or "on (or below)" another element, the element may be on an upper surface (or a lower surface) of the other element, and intervening elements may be present between the element and the other element on (or below) the element.

In addition, when an element is referred to as being "connected", "coupled" or "linked" to another element, the element may be directly connected or coupled to the other element, but it should be understood that intervening elements may be present between each element, or each element may be "connected", "coupled" or "linked" to each other through another element. In addition, when a portion is electrically coupled to another part, this includes not only the case where it is directly connected, but also the case where it is connected with another element in between.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. In addition, it will also be understood that when a layer is referred to as being "between" two layers, it can be the only layer between the two layers, or one or more intervening layers may also be present. Like reference numerals refer to like elements throughout.

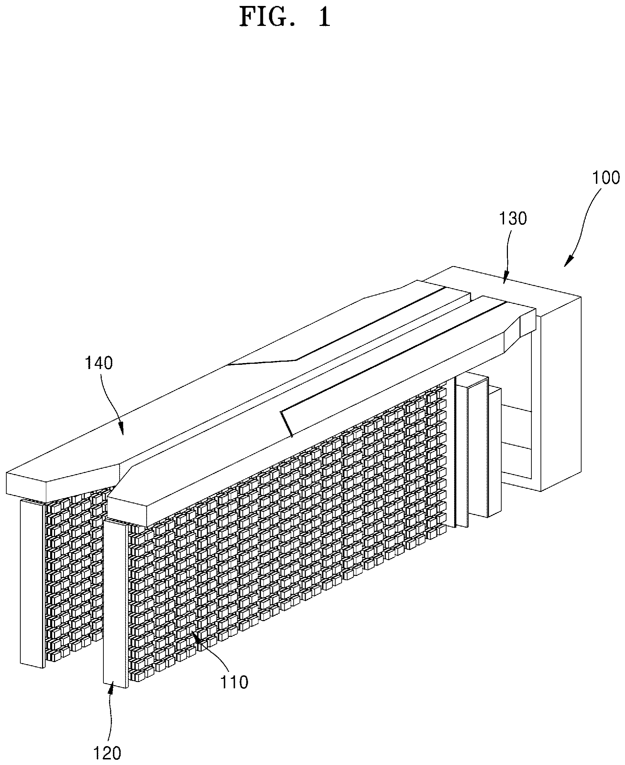

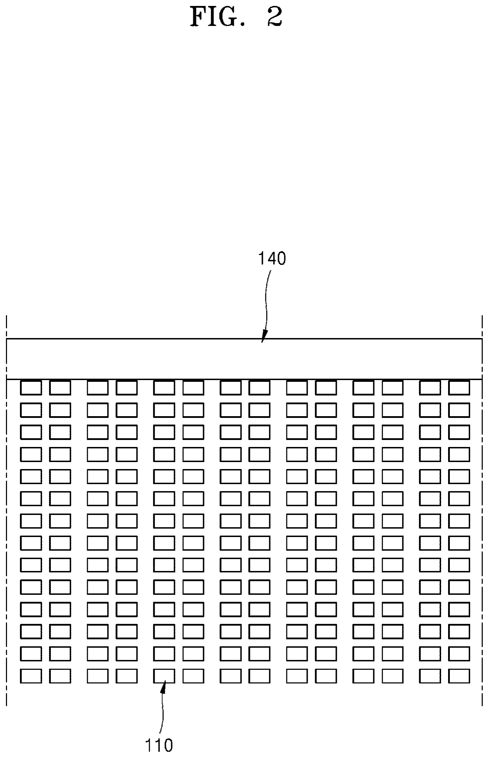

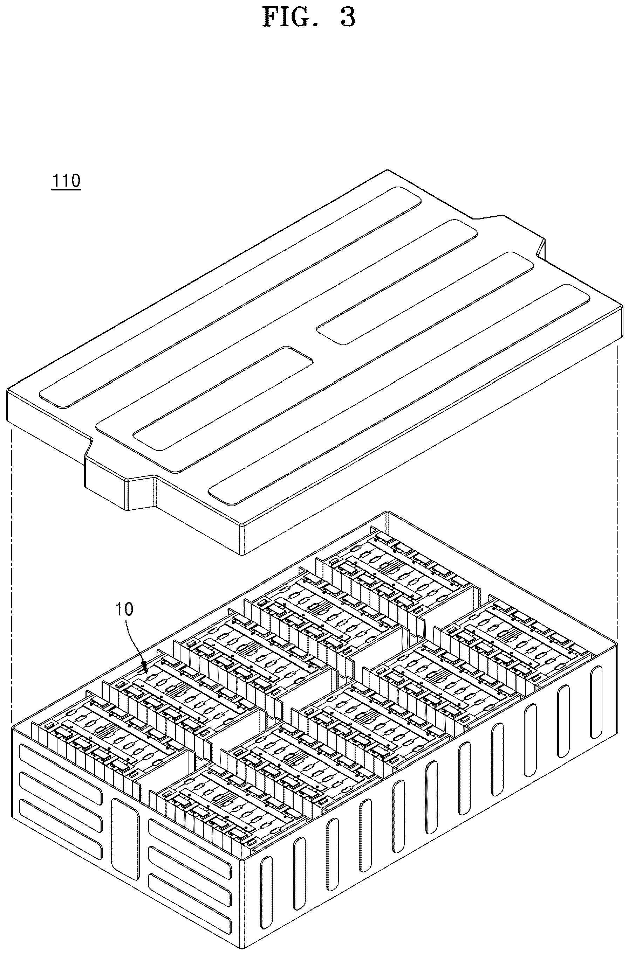

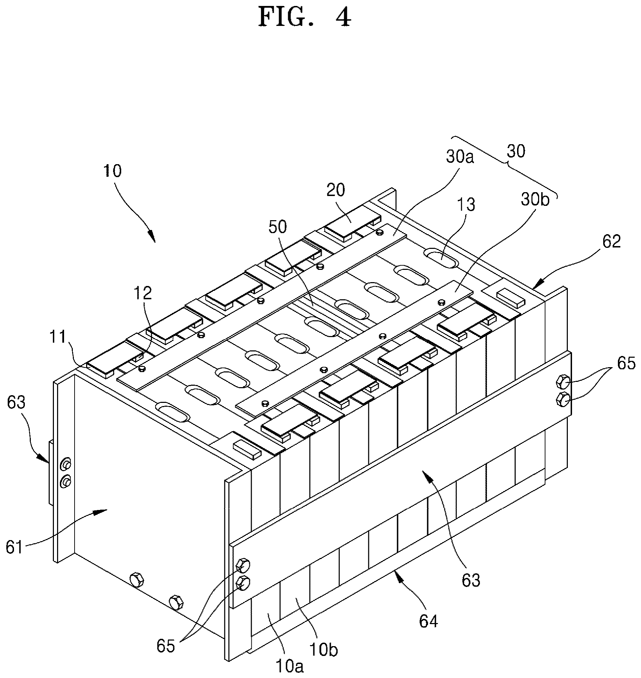

FIG. 1 is a perspective view schematically illustrating an example of an energy storage system 100 according to an embodiment, FIG. 2 is a cross-sectional view schematically illustrating an example of a battery rack 120 of FIG. 1, FIG. 3 is a perspective view schematically illustrating an example of a battery pack 110 included in the battery rack 120 of FIG. 2, and FIG. 4 is a perspective view schematically illustrating an example of a battery module 10 included in the battery pack 110 of FIG. 3.

Referring to FIGS. 1 to 4, the energy storage system 100 according to an embodiment may include a battery rack 120 including battery packs 110, an air-conditioner 130 that discharges air, and a duct 140 that delivers air discharged from the air-conditioner 130 to the battery rack 120. For example, referring to FIG. 1, the duct 140 may be above the battery rack 120 and may extend lengthwise along the entirety of the battery rack 120.

The battery rack 120 may be located in plurality within one energy storage system 100. The battery rack 120 illustrated in the drawing may be divided into several parts or may be located as a single body. For example, referring to FIG. 1, one air-conditioner 130 may be positioned adjacent to and overlapping ends of a plurality of battery racks 120.

As illustrated in FIG. 2, the battery rack 120 may accommodate a plurality of battery packs 110. As illustrated in FIG. 1, the battery packs 110 may be stacked to fit the internal size and shape of the energy storage system 100, and the number of stacked battery packs 110 may vary depending on the size of the battery rack 120 and the size of the battery packs 110.

A single battery pack 110 may include a plurality of battery modules 10, as illustrated in FIG. 3. In addition, the battery module 10 may include a plurality of battery cells 10a and 10b and housings 61, 62, 63, and 64 surrounding the battery cells 10a and 10b, as illustrated in FIG. 4. Each of the battery cells 10a and 10b may include an electrode assembly, a first current collector, a first terminal, a second current collector, a second terminal, a case, and a cap assembly.

In addition, the battery cells 10a and 10b may be electrically connected to a protective circuit module 30. The protective circuit module 30 may be a battery management system (BMS). In addition, a connection tab 20 including a body portion that contacts terminal portions 11 and 12 between adjacent battery cells 10a and 10b and an extension portion that extends from the body portion and is connected to the protective circuit module 30 may be positioned on the battery cells 10a and 10b. The connection tab 20 may be a busbar.

The housings 61, 62, 63, and 64 may include a pair of end plates 61 and 62 facing wide surfaces of the battery cells 10a and 10b, a side plate 63 connecting the pair of end plates 61 and 62, and a bottom plate 64. The side plate 63 may support the sides of the battery cells 10a and 10b, and the bottom plate 64 may support the bottom surfaces of the battery cells 10a and 10b. In addition, the pair of end plates 61 and 62, the side plate 63, and the bottom plate 64 may be connected by a member, e.g., a bolt 65.

The protective circuit module 30 may include a first protective circuit module 30a and a second protective circuit module 30b that extend from different locations in a direction in which the battery cells 10a and 10b are arranged. The first protective circuit module 30a and the second protective circuit module 30b may be spaced apart from each other by a certain distance but positioned parallel to each other to be electrically connected to adjacent connection tabs 20, respectively.

For example, the first protective circuit module 30a may be formed to extend on one side of upper portions of the battery cells 10a and 10b in one direction in which the battery cells 10a and 10b are arranged, and the second protective circuit module 30b may be formed to extend on the other side of the upper portions of the battery cells 10a and 10b in the one direction in which the battery cells 10a and 10b are arranged. The second protective circuit module 30b may be positioned to be spaced apart from the first protective circuit module 30a by a certain distance with a vent 13 therebetween but may be located parallel to the first protective circuit module 30a.

In this manner, the first and second protective circuit modules 30a and 30b may be arranged parallel and spaced apart from each other in one direction in which the battery cells are arranged, thereby minimizing the area of a printed circuit board (PCB) constituting the protective circuit module 30. Because the protective circuit module 30 is configured as two separate protective circuit modules 30a and 30b, unnecessary PCM area may be minimized.

Also, the first protective circuit module 30a may be connected to the second protective circuit module 30b by a conductive connecting member 50. For example, one side of the conductive connecting member 50 may be connected to the first protective circuit module 30a, and the other side of the conductive connecting member 50 may be connected to the second protective circuit module 30b, thereby electrically connecting the first and second protective circuit modules 30a and 30b.

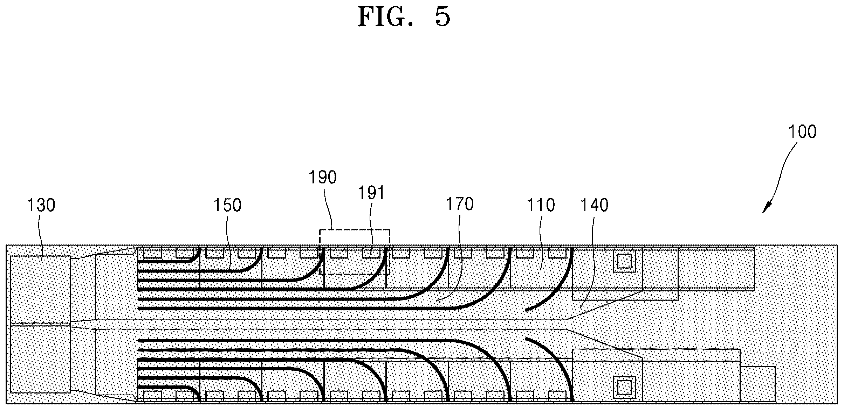

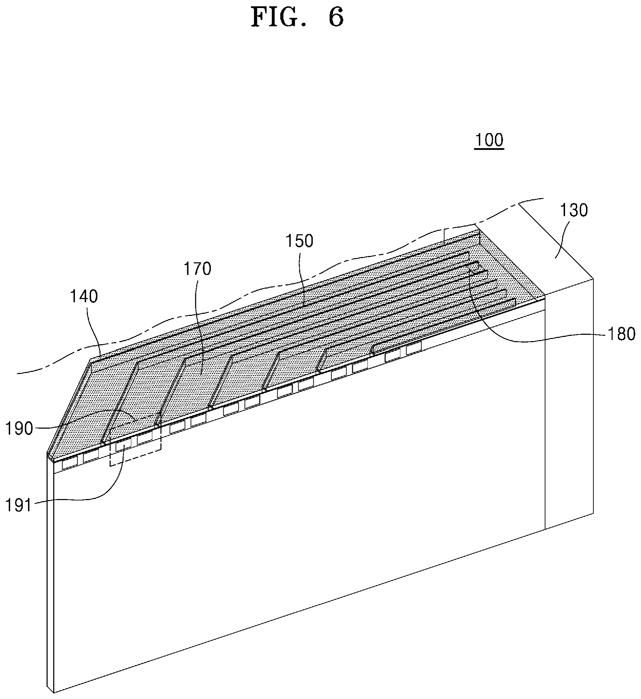

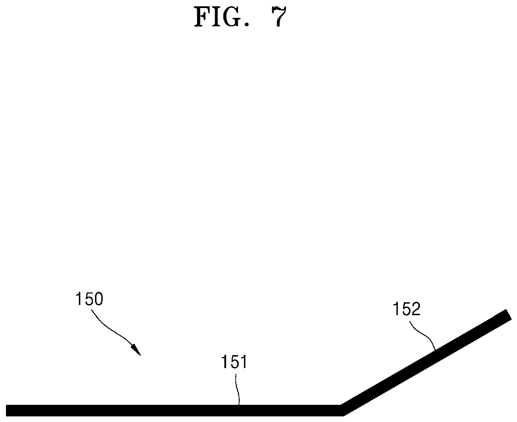

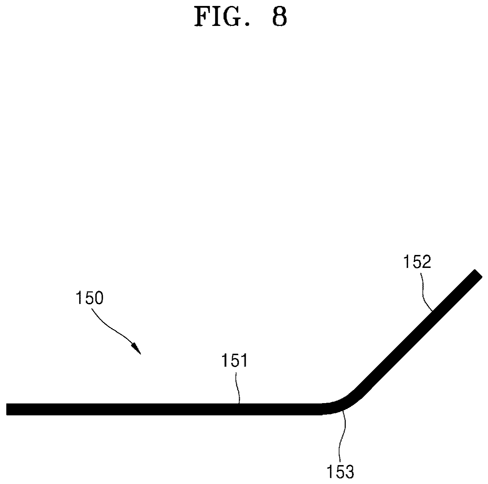

FIG. 5 is a plan view schematically illustrating an example of the duct 140 of FIG. 1, FIG. 6 is a perspective view schematically illustrating a portion of the duct 140 of FIG. 5, FIG. 7 is a cross-sectional view schematically illustrating an example of a first extension portion 151 and a second extension portion 152 of the 140 duct of FIG. 5, and FIG. 8 is a cross-sectional view schematically illustrating another example of the first extension portion 151 and the second extension portion 152 of the duct of FIG. 5.

Referring to FIGS. 5 to 8, the duct 140 may include a plurality of baffles 150 arranged in a longitudinal direction of the duct 140 within the duct 140. For example, referring to FIG. 6, a longitudinal direction of each baffle 150 may extend along a longitudinal direction of the duct 140.

As illustrated in FIG. 5, each of the baffles 150 may be mounted below the duct 140 (e.g., between the top and bottom of the duct 140) to divide a fluid flow of air starting from the air-conditioner 130. For example, referring to FIGS. 6-7, each of the baffles 150 may include a first extension portion 151 extending lengthwise from the air-conditioner 130 in the longitudinal direction of the duct 140 and within the duct 140, and a second extension portion 152 extending from an edge of the first extension portions 151 opposite the air-conditioner 130 toward a bottom of the duct 140.

For example, as illustrated in FIGS. 6 and 7, the first extension portions 151 may extend in the longitudinal direction of the duct 140, and the second extension portions 152 may be connected to the first extension portions 151 at an angle of 30° to 45° with the first extension portions 151 and may extend toward a discharge portion 190. In addition, the first extension portions 151 may be spaced apart from each other in a direction perpendicular to the longitudinal direction of the duct 140. Accordingly, a plurality of flow paths 170 delivering air toward the discharge portion 190 by the baffles 150 may be defined, e.g., a length of each flow path 170 may be adjusted to reach and cool a different battery pack 110 (FIG. 5).

The first extension portion 151 and the second extension portion 152 may have the same or different thicknesses. For example, the thickness of the first extension portion 151 may be thicker than the thickness of the second extension portion 152 to strengthen the fastening between the baffle 150 and the duct 140.

A first end of the second extension portion 152 may be connected to the first extension portion 151, and a second end of the second extension portion 152 (e.g., an end opposite the first end) may be located between outlets 191 of the discharge portion 190. A plurality of outlets 191 may be arranged adjacent to each other along the longitudinal direction of the duct 140, and one or more outlets 191 may be arranged between the second extension portions 152 (e.g., two outlets 191 may be arranged between two second extension portions 152 that are adjacent to each other). In addition, the second extension portion 152 may not contact the outlet 191. Accordingly, the second extension portion 152 located between the outlets 191 may partition the outlets 191.

In another example, as illustrated in FIG. 8, at least one of the baffles 150 may further include a round corner portion 153 (e.g., a curved corner portion) connecting the first extension portion 151 to the second extension portion 152 between the first extension portion 151 and the second extension portion 152. For example, a baffle 150 that is adjacent to the discharge portion 190 and is relatively close to the air-conditioner 130 may not have a plane of the round corner portion 153, and a baffle 150 that is adjacent to the discharge portion 190 and is relatively far from the air-conditioner 130 may have the round corner portion 153, so that the air may flow smoothly within the flow path 170 by using a mixture of various types of baffles 150.

Although the baffles 150 including the first extension portion 151 and the second extension portion 152 are installed for the same purpose within the duct 140, the angles of respective corner portions may be different in order to optimize the flow of the flow path 170, e.g., the corner portion may be sharp with different angle dimensions or may be a round corner portion with different curvatures. In addition, the corner portion with an optimized angle may prevent eddy currents of the fluid, thereby reducing cooling loss.

Although the baffles 150 including the first extension portion 151 and the second extension portion 152 are installed in the same duct 140, the angles formed by the end of the baffle 150, i.e., the second extension portion 152, and the discharge portion 190 may be different in order to optimize the flow of the flow path 170. In addition, the shape of the corner portion of the first extension portion 151 and the second extension portion 152 constituting the baffle 150 may be curved or flat, e.g., the baffle 150 may be installed so that the curvature of the round surface is optimized for each outlet 191.

For example, the first extension portion 151 and the second extension portion 152 of each baffle 150 may be connected by a chemical fastening (e.g., welding) and/or a mechanical fastening (e.g., bolts and nuts). In another example, the first extension portion 151 and the second extension portion 152 may be manufactured to be integrally connected in advance (e.g., formed simultaneously in a same process and of a same material to define a monolithic and seamless structure) through, e.g., forging, punching, or casting without fastening.

As illustrated in FIG. 6, the flow path 170 may be partitioned by a plurality of baffles 150 and may include an inlet 180 through which air from the air-conditioner 130 flows in and the discharge portion 190 through which air is discharged after cooling the battery pack 110.

The inlet 180 may be installed apart from the air-conditioner 130, and air discharged from the air-conditioner 130 may enter the inlet 180. The inlet 180 may be a starting point of the section partitioned by each baffle 150 and may allow air to enter to form the flow path 170. Air may be uniformly supplied to the battery packs 110 through the flow paths 170 formed using the baffles 150, thereby improving the cooling efficiency of the energy storage system 100.

The fluid discharged from the air-conditioner 130 flows through a plurality of flow paths 170, and the outlets 191 may be arranged at one end of each of the flow paths 170. The outlets 191 may be arranged in the longitudinal direction of the duct 140, and the baffles 150 may partition the outlets 191 so that the number of outlets 191 included in the discharge portion 190 may be determined.

The discharge portion 190 may include a plurality of outlets 191, as illustrated in FIG. 5. Each of the outlets 191 may include a fan or a member for air circulation, and each of the outlets 191 may include a cap covering a corresponding outlet 191 for controlling the number of operating (e.g., open) outlet 191. In addition, the number of outlets 191 may vary depending on the discharge portion 190 separated by the baffle.

The air-conditioner 130 may be connected to the duct 140, and the connection method may be a chemical connection (e.g., welding) and/or a physical connection (e.g., bolts). For example, referring to FIG. 6, the duct 140 may be positioned such that the first extension portions 151 of the baffles 150 may be adjacent to the air-conditioner 130, e.g., the first extension portion 151 may be oriented between the air-conditioner 130 and a corresponding second extension portion 152.

The duct 140 may be coupled to any position on one side of the energy storage system 100, e.g., the duct 140 may be coupled to an upper surface of the energy storage system 100, to enable a simple device configuration and ensure stable coupling. In addition, because cold fluid generally flows downward, the outlets 191 may be positioned above the battery rack 120 so that the fluid introduced from the air-conditioner 130 may flow to the battery rack 120 located below the duct 140, thereby minimizing energy consumed for supplying cold air.

The outlets 191 may be arranged on one side of the duct 140, e.g., on the outer side of the duct 140, and may be formed in various shapes corresponding to the height of the duct 140. The shape and number of the outlets 191 may be arranged so that the internal fluid may flow smoothly.

Cold air and fluid may flow from the air-conditioner 130 through the flow path 170 in the duct 140, and the cold air and fluid may be discharged from the duct through the outlet 191. The arrangement and number of flow paths 170 may be partitioned by considering the number of battery packs 110, heat generation, air resistance due to the flow paths 170, etc.

In an embodiment, the length of the first extension portion 151 of the baffle 150 of the energy storage system 100 may decrease as the location of the outlet 191 adjacent to the second extension portion 152 is closer to the air-conditioner 130. In addition, the length of the first extension portion 151 may also be changed by the size of the discharge portion 190, the number of outlets 191, and the thickness of the baffle 150.

As described above, the baffles 150 serve to guide the flow of fluid introduced from the air-conditioner 130, thereby improving the efficiency of the internal fluid flow of the energy storage system 100 and uniformly forming the cooling amount of the battery pack 110 inside the energy storage system 100.

The size of the duct 140 may be changed depending on the size of the energy storage system 100. As the size of the duct 140 changes, the size of the internal baffle 150 may also be changed proportionally.

The baffle 150 has a structure including the corner portion connecting the first extension portion 151 to the second extension portion 152, thereby enabling efficient cooling of each battery pack 110 accommodated in the energy storage system 100 and also enabling efficient supply of fluid to the energy storage system 100 and extending the lifespan of the energy storage system 100. The baffles 150 may be installed on the upper surface of the battery rack 120 that accommodates the battery packs 110, and fluid is supplied to the interior of the duct 140 together with the combination of the air-conditioner 130.

In addition, the air-conditioner 130 that supplies cooling fluid may be installed on one side of the battery rack 120 to be coupled to the duct 140, and when coupled, the air-conditioner 113 may supply fluid so that the fluid is supplied to the duct 140 to enable efficient cooling. Here, the performance and model of the air-conditioner 130 connected to one duct 140 may be determined according to the size of each duct 140 and the battery pack 110 and power required by the energy storage system 100.

Accordingly, in the energy storage system 100, by forming the flow path 170 using the baffles 150 that assist in evenly supplying the fluid generated from the air-conditioner 130 to control the flow rate flowing in each duct 140, the batteries inside the energy storage system 100 may be efficiently cooled.

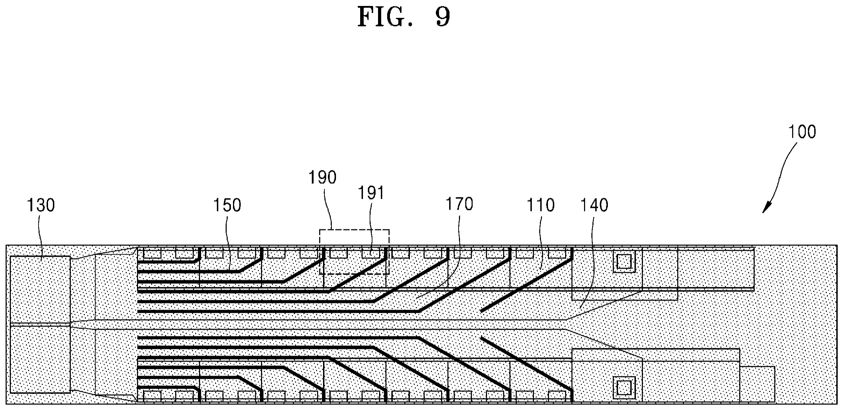

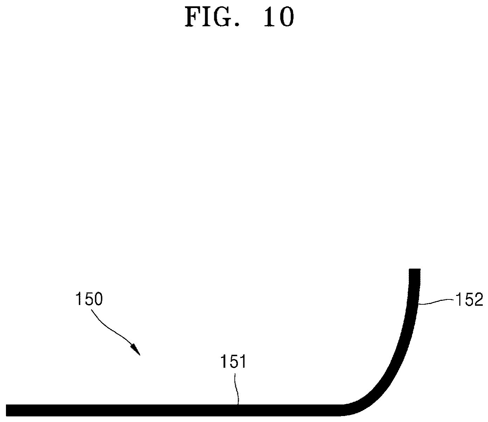

FIG. 9 is a plan view schematically illustrating another example of a duct 140 of FIG. 1, and FIG. 10 is a cross-sectional view schematically illustrating an example of the first extension portion 151 and a second extension portion 152 of the duct 140 of FIG. 9.

Referring to FIGS. 9 and 10, the duct 140 may include a baffle 150 including the first extension portion 151 and the second extension portion 152 that is connected to one side of the duct 140 and determines the shape of the flow path 170. Because the second extension portion 152 has a curved surface, noise, friction, vibration, etc. that may occur as the air introduced through the first extension portion 151 causes a vortex at the corner portion (e.g., a round corner portion or a sharp edge) may be reduced.

By making the flow of the flow path 170 differentiable through the curved portion of the second extension portion 152, the fluid friction inside the flow path 170 may be reduced. When the second extension portion 152 is curved, the second extension portion 152 may be located to be closer to a stream function than the baffle 150 in which the corner portion is at a right angle, so that results similar to fluid analysis and simulation may be obtained.

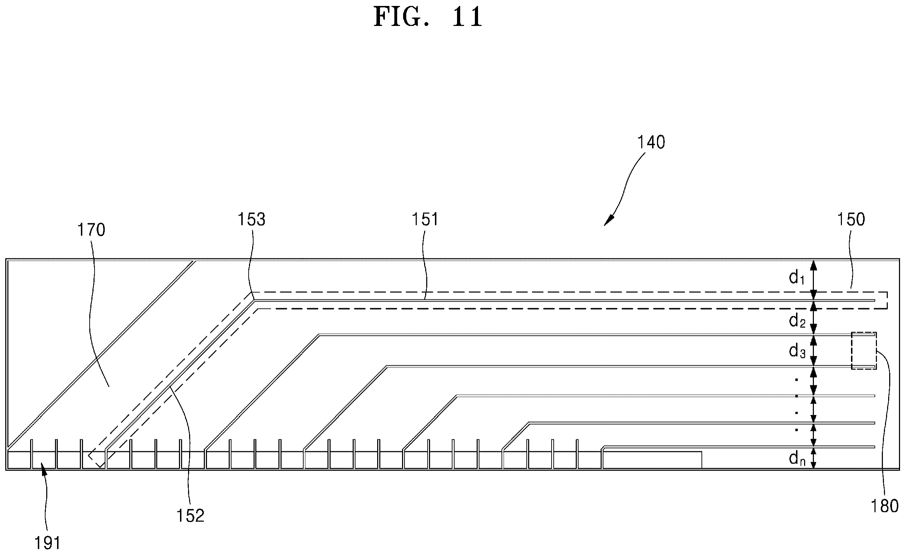

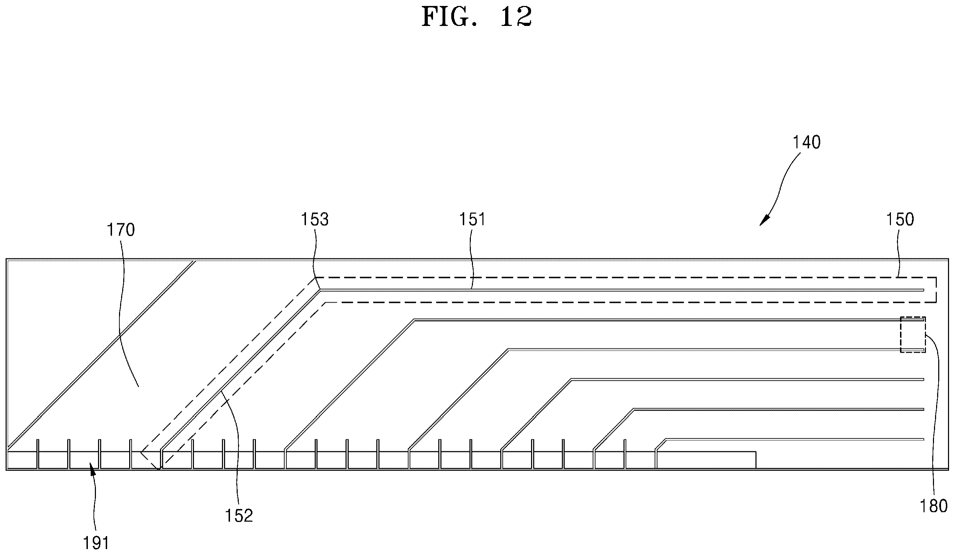

Hereinafter, examples of variations in the shape of the baffle 150 and the spacing between each baffle 150 according to the size of the inlet 180 and the arrangement of the outlet 191 according to an embodiment are described with reference to FIGS. 11 and 12.

FIG. 11 is a plan view schematically illustrating another example of a duct 140 of FIG. 1.

Referring to FIG. 11, the spacing between the first extension portions 151 may increase as the length of the first extension portions 151 increases. As the length of the first extension portion 151 increases, the distance between the battery pack 110 and the air-conditioner 130 may increase and the air from the air-conditioner 130 has to be sent a relatively long distance, and thus, the spacing between the first extension portions 151 may increase as the length of the first extension portion 151 increases.

The section defined by dₙ may decrease as the baffle 150 is closer to the outlet 191. By narrowing the spacing between the baffles 150, less air may be allowed to flow to the nearby outlet 191, and by increasing the spacing between the inlets 180, more air may flow to the outlet 191 located farther away. A certain number of outlets 191 may be arranged at the end of each flow path 170. However, the number of outlets 191 may be changed depending on the shape of each baffle 150 and the size of the inlet 180 or depending on the power required by the energy storage system 100.

FIG. 12 is a plan view schematically illustrating another example of a duct 140 of FIG. 1.

Referring to FIG. 12, the number of outlets 191 at the end of the flow path 170 may increase as the distance from the inlet 180 to the outlet 191 increases. For example, the number of outlets 191 between two adjacent second extension portions 152 may increase as the distance from the inlet 180 to the outlet 191 increases, e.g., the number of outlets 191 between two adjacent second extension portions 152 may increase from two (in an area close to the inlet 180) to three (at an area far from the inlet 180). As such, a total area of the plurality of outlets 191 in the flow paths 170 (as partitioned by the plurality of baffles 150) increases as a distance from the air-conditioner 130 increases.

By increasing the number of outlets 191 while maintaining the size of the inlet 180 to be the same, a flow rate inside each flow path 170 surrounded by the baffle 150 may vary. By varying the flow rate inside the flow path 170, the cooling performance of the battery pack 110 may be adjusted according to each location of the energy storage system 100. In addition, the battery packs 110 inside the energy storage system 100 may be cooled to a similar degree.

If each inlet 180 has the same size and the number of each outlet 191 having the same size is different for each flow path 170, the same amount of flow may be introduced to all inlets 180. However, because the widths of the outlets 191 are different, the pressure within each flow path 170 may be controlled by changing the size or number of the outlets 191 for each flow path 170.

By way of summation and review, the present disclosure provides an energy storage system with improved cooling performance. That is, the energy storage system according to example embodiments provides a duct with baffles that are arranged and shaped to facilitate partition of air flow within the duct, so the air is uniformly distributed to cool the battery evenly, thereby increasing the lifespan of the overall energy storage system.

However, the effects obtainable through the present disclosure are not limited to the effects described above, and other technical effects not mentioned will be clearly understood by those skilled in the art from the description of the disclosure described above.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An energy storage system (100), comprising:
a battery rack (120) including a plurality of battery packs (110);
an air-conditioner (130) configured to discharge air; and
a duct (140) delivering the air discharged from the air-conditioner to the battery rack,
wherein the duct (140) includes a plurality of outlets (191) and a plurality of baffles (150), the plurality of baffles (150) being arranged in a longitudinal direction of the duct within the duct and being configured to adjust an amount of air supplied to the plurality of outlets (191).

2. The energy storage system as claimed in claim 1, wherein:
the plurality of outlets (191) are arranged in the longitudinal direction of the duct (140), and
the plurality of baffles (150) partition the plurality of outlets (191).

3. The energy storage system as claimed in claim 1, wherein each of the plurality of baffles (150) includes:
a first extension portion (151) extending in the longitudinal direction of the duct (140), and
a second extension portion (152), the second extension portion being bent from the first extension portion (151) toward the plurality of outlets (191).

4. The energy storage system as claimed in claim 3, wherein the first extension portions (151) of the plurality of baffles (150) are spaced apart from each other in a direction perpendicular to the longitudinal direction of the duct (140) to define a plurality of flow paths (170).

5. The energy storage system as claimed in claim 4, wherein a spacing between the first extension portions (151) increases as a length of each of the first extension portions increases.

6. The energy storage system as claimed in claim 3, wherein at least one of the plurality of baffles (150) further includes a round corner portion (153) between the first extension portion (151) and the second extension portion (152) to connect the first extension portion to the second extension portion.

7. The energy storage system as claimed in claim 3, wherein a length of the first extension portions (151) of the plurality of baffles (150) decreases as a location of a corresponding one of the plurality of outlets (191) adjacent to a corresponding second extension portion (152) is closer to the air-conditioner (130).

8. The energy storage system as claimed in claim 3, wherein an angle between the first extension portion (151) and the second extension portion (152) is about 30 degrees to about 45 degrees.

9. An energy storage system (100), comprising:
a battery rack (120) including a plurality of battery packs (110);
an air-conditioner (130) configured to discharge air; and
a duct (140) delivering the air discharged from the air-conditioner to battery rack,
wherein the duct (140) includes a plurality of outlets (191) and a plurality of baffles (150), and the plurality of baffles (150) being arranged in a longitudinal direction of the duct, and
wherein the plurality of outlets (191) are arranged in the longitudinal direction of the duct and the plurality of outlets being partitioned by the plurality of baffles.

10. The energy storage system as claimed in claim 9, wherein the number of outlets of the plurality of outlets (191) partitioned by two adjacent ones of the plurality of baffles (150) increases as a distance from the air-conditioner increases.

11. The energy storage system as claimed in claim 9, wherein each of the plurality of baffles (150) includes:
a first extension portion (151) extending in in the longitudinal direction of the duct (140), and
a second extension portion (152), the second extension portion being bent from the first extension portion (151) toward the plurality of outlets (191).

12. The energy storage system as claimed in claim 11, wherein the first extension portions (151) of the plurality of baffles (150) are spaced apart from each other in a direction perpendicular to the longitudinal direction of the duct (140) to define a plurality of flow paths (170).

13. The energy storage system as claimed in claim 11, wherein at least one of the plurality of baffles (150) includes a round corner portion (153) between the first extension portion (151) and the second extension portion (152) to connect the first extension portion to the second extension portion.

14. The energy storage system as claimed in claim 11, wherein a length of the first extension portions (151) of the plurality of baffles (150) decreases as a location of a corresponding one of the plurality of outlets (191) is closer to the air-conditioner (130).

15. The energy storage system as claimed in claim 11, wherein an angle between the first extension portion (151) and the second extension portion (152) is about 30 degrees to about 45 degrees.
